# EUROPÄISCHE PATENTANMELDUNG

(11) **EP 3 375 802 A1**
(43) Veröffentlichungstag der Anmeldung: **19.09.2018**
(21) Anmeldenummer: 17160750.0
(22) Anmeldetag: 14.03.2017
(51) Int. Cl.: C08G 59/18, C09D 163/00, C08G 59/50

(54) **VERFAHREN ZUR HERSTELLUNG EINES HÄRTERS FÜR EMISSIONSARME EPOXIDHARZ-ZUSAMMENSETZUNGEN**

(71) Anmelder: SIKA TECHNOLOGY AG, 6340 Baar (CH)
(72) Erfinder: Kasemi, Edis, 8046 Zürich (CH); Kramer, Andreas, 8006 Zürich (CH); Stadelmann, Ursula, 8046 Zürich (CH); Burckhardt, Urs, 8049 Zürich (CH)
(74) Vertreter: Sika Patent Attorneys

(57) **Zusammenfassung**

Die vorliegende Erfindung betrifft ein Verfahren zur Herstellung eines Härters für Epoxidharze, in dem ein Amingemisch enthaltend mindestens ein Ausgangs-Amin der Formel (I) und mindestens ein alkyliertes Amin der Formel (II) mit mindestens einem Glycidylether der Formel (III) umgesetzt bzw. adduktiert wird. Das Amingemisch stellt dabei insbesondere eine Reaktionsmischung aus der partiellen Alkylierung des Amins der Formel (I) dar.

Das beschriebene Verfahren ermöglicht mit geringem Energieaufwand und hoher Raum-Zeit-Ausbeute geruchsarme, wenig toxische, niedrigviskose und hochreaktive Härter für Epoxidharze und Epoxidharz-Produkte, die bei Umgebungstemperaturen und insbesondere auch in der Kälte rasch aushärten und dabei hochwertige Beschichtungen mit ebenmässiger, glänzender Oberfläche ermöglichen.

## Beschreibung

### Technisches Gebiet

Die Erfindung betrifft das Gebiet der Härter für Epoxidharze und Epoxidharz-Zusammensetzungen, sowie Beschichtungen, Beläge und Anstriche.

### Stand der Technik

Für Beschichtungszwecke geeignete Epoxidharz-Produkte sollen möglichst wenig Verdünner enthalten und dadurch emissionsarm sein, dabei trotzdem eine so niedrige Viskosität aufweisen, dass sie bei Umgebungstemperatur gut verarbeitbar sind. Weiterhin sollen sie nach der Applikation möglichst schnell und störungsfrei aushärten, auch bei feucht-kalten Bedingungen, und dabei eine ebenmässige, glänzende und nichtklebrige Oberfläche ohne Trübungen, Flecken oder Krater ausbilden. Schliesslich soll die erhaltene Beschichtung eine hohe Härte und Beständigkeit besitzen. Für optisch anspruchsvolle Anwendungen, beispielsweise Deckbeläge von Fussböden, soll sie zudem einen hohen Glanzgrad und eine geringe Neigung zum Vergilben unter Lichteinfluss aufweisen. Solche Eigenschaften können mittels spezieller Amin-Härter erreicht werden.
WO 2015/117846 beschreibt Monoaddukte von 1,2-Propandiamin und aromatischem Monoglycidylether, insbesondere Kresylglycidylether, und deren Verwendung als Härter für Epoxidharze. Solche Addukt-Amine ermöglichen emissionsarme Epoxidharz-Produkte mit guten Eigenschaften, insbesondere wenn sie mit geeigneten niedrigviskosen Aminen verdünnt werden.
WO 2016/023839 beschreibt die Verwendung von gegebenenfalls substituiertem benzyliertem 1,2-Propandiamin als Härter für Epoxidharze. Diese alkylierten Amine sind sehr niedrigviskos und ermöglichen als solche und insbesondere zusammen mit Addukt-Aminen emissionsarme Epoxidharz-Produkte mit guten Eigenschaften.
Ein Härter enthaltend eine Kombination von Addukt-Aminen und alkylierten Aminen, insbesondere eine Kombination der aus WO 2015/117846 und WO 2016/023839 bekannten Amine, ermöglicht Epoxidharz-Produkte mit besonders interessanten Eigenschaften. Das bekannte Verfahren zur Herstellung eines solchen Härters ist aber relativ aufwändig, da die Amine jeweils einzeln hergestellt werden und das bei beiden Herstellungen im Überschuss eingesetzte Ausgangs-Amin 1,2-Propandiamin jeweils einzeln entfernt werden muss, um emissionsarme Produkte zu erhalten.

### Darstellung der Erfindung

Aufgabe der Erfindung ist es daher, ein vereinfachtes Verfahren zur Herstellung eines geruchsarmen und wenig toxischen, niedrigviskosen sowie hochreaktiven Härters enthaltend eine Kombination von Addukt-Aminen und alkylierten Aminen, wie den aus WO 2015/117846 und WO 2016/023839 bekannten Aminen, für Epoxidharze zur Verfügung zu stellen, der emissionsarme Epoxidharz-Produkte ermöglicht, die bei Umgebungstemperaturen und insbesondere auch in der Kälte rasch aushärten und dabei hochwertige Beschichtungen mit ebenmässiger, glänzender Oberfläche ermöglichen.
Diese Aufgabe wird mit dem Verfahren wie in Anspruch 1 beschrieben gelöst. Dabei wird ein Amingemisch enthaltend mindestens ein Ausgangs-Amin der Formel (I) und mindestens ein alkyliertes Amin der Formel (II) mit einem Glycidylether der Formel (III) umgesetzt. Dabei entsteht ein Härter für Epoxidharze, welcher mindestens ein Addukt-Amin der Formel (IV) und typischerweise mindestens ein alkyliertes Amin der Formel (II) enthält.
Das erfindungsgemässe Verfahren ist eine starke Vereinfachung des bekannten Herstellverfahrens, in welchem die vorgängig separat hergestellten und aufgereinigten Amine der Formel (II) und (IV) miteinander abgemischt werden. Es stellt eine direkte Herstellung des Härters dar, indem das Ausgangs-Amin der Formel (I) in einer ersten Stufe alkyliert und die erhaltene Reaktionsmischung in einer zweiten Stufe adduktiert wird, ohne die Reaktionsmischung der Alkylierung durch Destillation aufzureinigen. Bei geeigneter Stöchiometrie enthält der dabei entstehende Härter als Hauptkomponenten alkylierte Amine der Formel (II) und Addukt-Amine der Formel (IV).
Das erfindungsgemässe Verfahren ist deutlich schneller und ökonomischer durchführbar als das aus dem Stand der Technik bekannte Verfahren, da die Umsetzung als Eintopfreaktion geführt werden kann und die aufwändige Aufreinigung der separat hergestellten Amine, insbesondere die zweimalige Entfernung des überschüssigen Ausgangs-Amin der Formel (I), entfällt. Dadurch wird die Produktausbeute sowie die Raum-Zeit-Ausbeute erhöht und der Energieaufwand der Herstellung gesenkt.
Der aus dem erfindungsgemässen Verfahren erhaltene Härter ermöglicht geruchs- und emissionsarme, gut verarbeitbare Epoxidharz-Produkte mit schneller Aushärtung, hoher Härte bei schöner Oberfläche und relativ niedriger Neigung zum Vergilben. Überraschenderweise unterscheidet er sich in seinen Eigenschaften nur geringfügig von einem herkömmlich aus den separat hergestellten und aufgereinigten Aminen erhaltenen Härter, insbesondere auch in den besonders kritischen Punkten Viskosität, Reaktivität bzw. Aushärtungsgeschwindigkeit, sowie Vergilbungsneigung.
Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Verfahren zur Herstellung eines Härters für Epoxidharze, dadurch gekennzeichnet, dass
- ein Amingemisch enthaltend mindestens ein Ausgangs-Amin der Formel (I) und mindestens ein alkyliertes Amin der Formel (II),

   H₂N-A-NH₂ (I)

   X-NH-A-NH-Y (II)

   wobei
   A in beiden Formeln für denselben Alkylen-Rest mit 2 bis 15 C-Atomen, welcher gegebenenfalls cyclische Anteile und gegebenenfalls sekundäre oder tertiäre Aminogruppen aufweist, steht,
   X für einen Wasserstoff-Rest oder für Y steht,
   Y für einen Alkyl- oder Cycloalkyl- oder Aralkyl-Rest mit 1 bis 20 C-Atomen steht,
- mit mindestens einem Glycidylether der Formel (III), 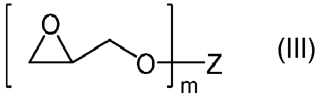 wobei
   m für 1 oder 2 oder 3 steht, und
   Z für einen m-wertigen, gegebenenfalls Ether-Sauerstoff aufweisenden Kohlenwasserstoff-Rest mit einem Molekulargewicht im Bereich von 56 bis 1'500 g/mol steht,
umgesetzt wird.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.
Als "Aminwasserstoff" werden die Wasserstoffatome von primären und sekundären Aminogruppen bezeichnet.
Als "Aminwasserstoff-Equivalentgewicht" wird die Masse eines Amins oder einer Amin-haltigen Zusammensetzung, die ein Molequivalent Aminwasserstoff enthält, bezeichnet.
Als "Verdünner" wird eine in einem Epoxidharz lösliche und dessen Viskosität senkende Substanz bezeichnet, welche bei der Aushärtung chemisch nicht in das Epoxid-Polymer eingebunden wird.
Als "Viskosität" wird die dynamische Viskosität oder Scherviskosität bezeichnet, welche durch das Verhältnis zwischen der Schubspannung und der Scherrate (Geschwindigkeitsgefälle) definiert ist und wie in der Beschreibung bzw. den Ausführungsbeispielen beschrieben bestimmt wird.
Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet, welches üblicherweise mittels Gelpermeationschromatographie (GPC) gegen Polystyrol als Standard bestimmt wird.
Als "Raumtemperatur" wird eine Temperatur von 23 °C bezeichnet.
Eine gestrichelte Linie in den Formeln stellt jeweils die Bindung zwischen einem Substituenten und dem zugehörigen Molekülrest dar.

Bevorzugt steht A für einen Alkylen-Rest mit 2 bis 10 C-Atomen, welcher gegebenenfalls cyclische Anteile und gegebenenfalls sekundäre oder tertiäre Aminogruppen aufweist.
Bevorzugt ist A frei von sekundären und tertiären Aminogruppen. Ein solches Amingemisch ermöglicht Härter, welche Epoxidharz-Produkte mit besonders schönen Oberflächen ermöglichen.

Besonders bevorzugt steht A für einen Alkylen-Rest mit 2 bis 6, insbesondere 2 oder 3, C-Atomen. Ein solcher Härter ermöglicht Epoxidharz-Produkte mit besonders schönen Oberflächen und besonders geringer Neigung zum Vergilben.

Bevorzugt ist A ausgewählt aus der Gruppe bestehend aus 1,2-Ethylen, 1,2-Propylen, 1,3-Propylen, 1,3-Pentylen, 2-Methyl-1,5-pentylen, 1,6-Hexylen, 2,2(4),4-Trimethyl-1,6-hexamethylen, 1,3-Cyclohexylen-bis(methylen), 1,4-Cyclohexylen-bis(methylen), 1,3-Phenylen-bis(methylen), 1,4-Phenylen-bis-(methylen), 1,2-Cyclohexylen, 1,3-Cyclohexylen, 1,4-Cyclohexylen, (1,5,5-Trimethylcyclohexan-1-yl)methan-1,3, 4(2)-Methyl-1,3-cyclohexylen, Methylendicyclohexan-4-yl, Methylenbis(2-methylcyclohexan-4-yl), (Bicyclo[2.2.1]heptan-2,5(2,6)-diyl)dimethylen, (Tricyclo[5.2.1.0^{2,6}]decan-3(4),8(9)-diyl)dimethylen, 3-Aza-1,5-pentylen, 3,6-Diaza-1,8-octylen, 3,6,9-Triaza-1,11-undecylen, 3,6,9,12-Tetraaza-1,14-tetradecylen, 3,6,9,12,15-Pentaaza-1,17-heptadecylen, 4-Aza-2,6-heptylen, 4-Aza-1,7-heptylen, 4,7-Diaza-1,10-decylen und 7-Aza-1,13-tridecylen.
Davon bevorzugt sind 1,2-Ethylen, 1,2-Propylen oder 2-Methyl-1,5-pentylen, insbesondere 1,2-Ethylen oder 1,2-Propylen.

Am meisten bevorzugt steht A für 1,2-Propylen. Ein solcher Härter ermöglicht Epoxidharz-Produkte mit besonders niedriger Viskosität, besonders schönen Oberflächen, besonders schneller Aushärtung und besonders geringer Neigung zum Vergilben.

Bevorzugt steht X für einen Wasserstoff-Rest.

Besonders bevorzugt enthält das Amingemisch neben mindestens einem monoalkylierten Amin der Formel (II), bei welchem X für einen Wasserstoff-Rest steht, zusätzlich mindestens ein dialkyliertes Amin der Formel (II), bei welchem X für Y steht.
Dabei liegt das Gewichtsverhältnis zwischen dem mono- und dem dialkylierten Amin der Formel (II) bevorzugt im Bereich von 40/60 bis 99/1, insbesondere 51/49 bis 90/10.
Ein solches Amingemisch ist besonders einfach erhältlich durch eine partielle Alkylierung des Ausgangs-Amins der Formel (I).

Bevorzugt steht Y für einen Alkyl- oder Cycloalkyl- oder Aralkyl-Rest mit 3 bis 10 C-Atomen.

Besonders bevorzugt steht Y für einen Rest der Formel 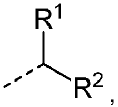 wobei
R¹ für einen Wasserstoff-Rest oder für Methyl oder Phenyl steht, und
R² für einen fünf- oder sechs- oder siebengliedrigen Cycloalkyl- oder Aryl-Rest mit 4 bis 7 C-Atomen steht, der gegebenenfalls Alkyl-substituiert ist.

Bevorzugt steht R¹ für einen Wasserstoff-Rest oder für Methyl, insbesondere für einen Wasserstoff-Rest.
Bevorzugt steht R² für Cyclohexyl, Phenyl oder 1-Naphthyl.

Besonders bevorzugt ist Y ausgewählt aus der Gruppe bestehend aus Cyclohexylmethyl, Benzyl, 1-Phenylethyl und 1-Naphthylmethyl.

Ganz besonders bevorzugt steht Y für Benzyl, 1-Phenylethyl oder 1-Naphthylmethyl, am meisten bevorzugt für Benzyl. Ein solcher Härter ist besonders niedrigviskos und ermöglicht Epoxidharz-Produkte mit schneller Aushärtung und besonders schönen Oberflächen.

Bevorzugt steht m für 1 oder 2.

Bevorzugt steht Z für den Rest eines ein- oder zweiwertigen Arylglycidylethers nach Entfernung der Glycidoxygruppen.

Besonders bevorzugt steht Z für den Rest von o-, m- oder p-Kresylglycidylether, Bisphenol-A-Diglycidylether, Bisphenol-F-Diglycidylether oder Bisphenol-A/F-Diglycidylether nach Entfernung der Glycidoxygruppen.
Am meisten bevorzugt steht Z für den Rest von o-Kresylglycidylether oder Bisphenol-A-Diglycidylether nach Entfernung der Glycidoxygruppen.

Das Ausgangs-Amin der Formel (I) steht bevorzugt für 1,2-Ethandiamin, 1,2-Propandiamin, 1,3-Propandiamin, 1,3-Pentandiamin (DAMP), 1,5-Diamino-2-methylpentan (MPMD), 1,6-Hexandiamin, 2,2(4),4-Trimethyl-hexamethylendiamin (TMD), 1,3-Bis-(aminomethyl)cyclohexan, 1,4-Bis-(aminomethyl)cyclohexan, 1,3-Bis-(aminomethyl)benzol, 1,4-Bis-(aminomethyl)benzol, 1,2-Diaminocyclohexan, 1,3-Diaminocyclohexan, 1,4-Diaminocyclohexan, 1-Amino-3-aminomethyl-3,5, 5-trimethylcyclohexan (Isophorondiamin oder IPDA), 2- und 4-Methyl-1,3-diaminocyclohexan und Mischungen davon, Bis-(4-aminocyclohexyl)methan, Bis-(4-amino-3-methylcyclohexyl)methan, 2,5(2,6)-Bis-(aminomethyl)bicyclo[2.2.1]heptan (NBDA), 3(4), 8(9)-Bis-(aminomethyl)tricyclo-[5.2.1.02,6]decan, Diethylentriamin (DETA), Triethylentetramin (TETA), Tetraethylenpentamin (TEPA), Pentaethylenhexamin (PEHA), Polyethylenpolyamin mit 5 bis 7 Ethylenamin-Einheiten (sogenanntes "higher ethylenepolyamine", HEPA), Dipropylentriamin (DPTA), N-(2-Aminoethyl)-1,3-propandiamin (N3-Amin), N,N'-Bis(3-aminopropyl)ethylendiamin (N4-Amin) oder Bis(hexamethylen)triamin (BHMT).

Besonders bevorzugt steht das Ausgangs-Amin der Formel (I) für 1,2-Ethandiamin, 1,2-Propandiamin oder MPMD, insbesondere für 1,2-Ethandiamin oder 1,2-Propandiamin, am meisten bevorzugt für 1,2-Propandiamin.

Besonders bevorzugt steht das alkylierte Amin der Formel (II) für N-Benzyl-1,2-ethandiamin oder eine Mischung aus N-Benzyl-1,2-ethandiamin und N,N'-Dibenzyl-1,2-ethandiamin; N-(1-Phenylethyl)-1,2-ethandiamin oder eine Mischung aus N-(1-Phenylethyl)-1,2-ethandiamin und N,N'-Bis(1-phenylethyl)-1,2-ethandiamin; N-(1-Naphthylmethyl)-1,2-ethandiamin oder eine Mischung aus N-(1-Naphthylmethyl)-1,2-ethandiamin und N,N'-Bis(1-naphthylmethyl)-1,2-ethandiamin; N¹-Benzyl-1,2-propandiamin oder N²-Benzyl-1,2-propandiamin oder eine Mischung davon, gegebenenfalls in einer Mischung mit N,N'-Dibenzyl-1,2-propandiamin; N¹-(1-Phenylethyl)-1,2-propandiamin oder N²-(1-Phenylethyl)-1,2-propandiamin oder eine Mischung davon, gegebenenfalls in einer Mischung mit N,N'-Bis(1-Phenylethyl)-1,2-propandiamin; N¹-(1-Naphthylmethyl)-1,2-propandiamin oder N²-(1-Naphthylmethyl)-1,2-propandiamin oder eine Mischung davon, gegebenenfalls in einer Mischung mit N,N'-Bis(1-naphthylmethyl)-1,2-propandiamin; oder für N¹-Benzyl-2-methyl-1,5-pentandiamin oder N⁵-Benzyl-2-methyl-1,5-pentandiamin oder eine Mischung davon, gegebenenfalls in einer Mischung mit N,N'-Dibenzyl-2-methyl-1,5-pentandiamin.

Ein bevorzugtes Amingemisch enthält
- als Ausgangs-Amin der Formel (I) ein Amin ausgewählt aus der Gruppe bestehend aus 1,2-Ethandiamin, 1,2-Propandiamin, 1,3-Propandiamin, 1,3-Pentandiamin (DAMP), 1,5-Diamino-2-methylpentan (MPMD), 1,6-Hexandiamin, 2,2(4),4-Trimethylhexamethylendiamin (TMD), 1,3-Bis-(aminomethyl)-cyclohexan, 1,4-Bis-(aminomethyl)cyclohexan, 1,3-Bis-(aminomethyl)benzol, 1,4-Bis-(aminomethyl)benzol, 1,2-Diaminocyclohexan, 1,3-Diaminocyclohexan, 1,4-Diaminocyclohexan, 1-Amino-3-aminomethyl-3,5,5-trimethylcyclohexan (Isophorondiamin oder IPDA), 2- und 4-Methyl-1,3-diaminocyclohexan und Mischungen davon, Bis-(4-aminocyclohexyl)methan, Bis-(4-amino-3-methylcyclohexyl)methan, 2,5(2,6)-Bis-(aminomethyl)bicyclo[2.2.1]-heptan (NBDA), 3(4), 8(9)-Bis(aminomethyl)tricyclo[5.2.1.02,6]decan, Diethylentriamin (DETA), Triethylentetramin (TETA), Tetraethylenpentamin (TEPA), Pentaethylenhexamin (PEHA), Polyethylenpolyamin mit 5 bis 7 Ethylenamin-Einheiten (sogenanntes "higher ethylenepolyamine", HEPA), Dipropylentriamin (DPTA), N-(2-Aminoethyl)-1,3-propandiamin (N3-Amin), N,N'-Bis(3-aminopropyl)ethylendiamin (N4-Amin) und Bis(hexamethylen)-triamin (BHMT); und
- als alkyliertes Amin der Formel (II) das entsprechende N-monobenzylierte und/oder N,N'-dibenzylierte Amin.

Ein weiteres bevorzugtes Amingemisch enthält
- als Ausgangs-Amin der Formel (I) 1,2-Ethandiamin; und
- als alkyliertes Amin der Formel (II) mindestens ein Amin ausgewählt aus der Gruppe bestehend aus N-Benzyl-1,2-ethandiamin, N,N'-Dibenzyl-1,2-ethandiamin, N-(4-Methoxybenzyl)-1,2-ethandiamin, N,N'-Bis(4-methoxybenzyl)-1,2-ethandiamin, N-(4-Dimethylaminobenzyl)-1,2-ethandiamin, N,N'-Bis(4-dimethylaminobenzyl)-1,2-ethandiamin, N-(1-Phenylethyl)-1,2-ethandiamin, N,N'-Bis(1-phenylethyl)-1,2-ethandiamin, N-(1-Naphthylmethyl)-1,2-ethandiamin und N,N'-Bis(1-naphthylmethyl)-ethandiamin.

Ein weiteres bevorzugtes Amingemisch enthält
- als Ausgangs-Amin der Formel (I) 1,2-Propandiamin; und
- als alkyliertes Amin der Formel (II) mindestens ein Amin ausgewählt aus der Gruppe bestehend aus N¹-Cyclohexylmethyl-1,2-propandiamin, N²-Cyclohexylmethyl-1,2-propandiamin, N,N'-Bis(cyclohexylmethyl)-1,2-propandiamin, N¹-Benzyl-1,2-propandiamin, N²-Benzyl-1,2-propandiamin, N,N'-Dibenzyl-1,2-propandiamin, N¹-(4-Methoxybenzyl)-1,2-propandiamin, N²-(4-Methoxybenzyl)-1,2-propandiamin, N,N'-Bis(4-methoxybenzyl)-1,2-propandiamin, N¹-(4-Dimethylaminobenzyl)-1,2-propandiamin, N²-(4-Dimethylaminobenzyl)-1,2-propandiamin, N,N'-Bis(4-dimethylaminobenzyl)-1,2-propandiamin, N¹-(1-Phenylethyl)-1,2-propandiamin, N²-(1-Phenylethyl)-1,2-propandiamin, N,N'-Bis(1-phenylethyl)-1,2-propandiamin, N¹-(1-Naphthylmethyl)-1,2-propandiamin, N²-(1-Naphthylmethyl)-1,2-propandiamin und N,N'-Bis(1-naphthylmethyl)-1,2-propandiamin.

Ein weiteres bevorzugtes Amingemisch enthält
- als Ausgangs-Amin der Formel (I) 1,5-Diamino-2-methylpentan; und
- als alkyliertes Amin der Formel (II) mindestens ein Amin ausgewählt aus der Gruppe bestehend aus N¹-Benzyl-1,5-diamino-2-methylpentan, N²-Benzyl-1,5-diamino-2-methylpentan, N,N'-Dibenzyl-1,5-diamino-2-methylpentan, N¹-(1-Phenylethyl)-1,5-diamino-2-methylpentan, N²-(1-Phenylethyl)-1,5-diamino-2-methylpentan und N,N'-Bis(1-phenylethyl)-1,5-diamino-2-methylpentan.

Am meisten bevorzugt ist ein Amingemisch enthaltend 1,2-Propandiamin, N¹-Benzyl-1,2-propandiamin, N²-Benzyl-1,2-propandiamin und N,N'-Dibenzyl-1,2-propandiamin. Ein solcher Härter ist ganz besonders niedrigviskos und ermöglicht Epoxidharz-Produkte mit besonders schneller Aushärtung, besonders schönen Oberflächen und besonders wenig Neigung zum Vergilben.

Der Glycidylether der Formel (III) steht bevorzugt für o-, m- oder p-Kresylglycidylether, Bisphenol-A-Diglycidylether, Bisphenol-F-Diglycidylether oder Bisphenol-A/F-Diglycidylether, insbesondere für o-Kresylglycidylether oder Bisphenol-A-Diglycidylether.

Bevorzugt sind im Amingemisch das Ausgangs-Amin der Formel (I) und alkylierte Amine der Formel (II) in einer solchen Menge vorhanden, dass das Gewichtsverhältnis zwischen dem Amin der Formel (I) und Aminen der Formel (II) im Bereich von 80/20 bis 10/90, bevorzugt 60/40 bis 20/80, liegt.

Im erfindungsgemässen Verfahren wird die Umsetzung zwischen dem Amingemisch und dem Glycidylether der Formel (III) bevorzugt so geführt, dass die primären Aminogruppen gegenüber den Epoxidgruppen im stöchiometrischen Überschuss vorhanden sind.

Bevorzugt liegt das Molverhältnis zwischen den primären Aminogruppen im Amingemisch und den Epoxidgruppen im Bereich von 3/1 bis 30/1, besonders bevorzugt 5/1 bis 20/1.
Eine solche Umsetzung wird im Folgenden auch als Adduktierung bezeichnet.

Bevorzugt liegt dabei das Molverhältnis zwischen dem Ausgangs-Amin der Formel (I) und den Epoxidgruppen im Bereich von 1/1 bis 15/1, besonders bevorzugt 2/1 bis 10/1.

Für den Fall, dass der Glycidylether der Formel (III) ein Monoglycidylether ist, m also für 1 steht, liegt das Molverhältnis zwischen dem Ausgangs-Amin der Formel (I) und den Epoxidgruppen bevorzugt im Bereich von 1.5/1 bis 10/1, insbesondere 2/1 bis 7/1.
Für den Fall, dass der Glycidylether der Formel (III) ein Di- oder Triglycidylether ist, m also für 2 oder 3 steht, liegt das Molverhältnis zwischen dem Ausgangs-Amin der Formel (I) und den Epoxidgruppen bevorzugt im Bereich von 2/1 bis 15/1, insbesondere 2.5/1 bis 10/1.

Bevorzugt liegt die Temperatur bei der Adduktierung im Bereich von 40 bis 120 °C, insbesondere 60 bis 100 °C.
Bevorzugt wird das Amingemisch vorgelegt und aufgewärmt und dann der Glycidylether der Formel (III) zudosiert, wobei darauf geachtet wird, dass die Temperatur der Reaktionsmischung im genannten Temperaturbereich verbleibt.

Nach der Adduktierung wird die erhaltene Reaktionsmischung bevorzugt durch ein geeignetes Verfahren von flüchtigen Bestandteilen befreit, bevorzugt mittels Destillation, insbesondere mittels Dünnfilm- und/oder Dünnschicht- und/oder Kurzwegdestillation, was auch als "Stripping" bezeichnet wird.

Bevorzugt wird nach der Adduktierung übriggebliebenes Ausgangs-Amin der Formel (I) zumindest teilweise aus dem Härter entfernt, insbesondere mittels Stripping.

Insbesondere für den Fall, dass das Ausgangs-Amin der Formel (I) als A einen Alkylen-Rest mit 2 bis 6, insbesondere 2 oder 3, C-Atomen aufweist, ist das Entfernen von übriggebliebenem Amin der Formel (I) bevorzugt. Auf diese Weise wird ein Härter erhalten, der weitgehend frei ist von flüchtigen Aminen, was in Bezug auf Geruch, Toxizität und Oberflächenqualität der damit erhaltenen Epoxidharz-Produkte vorteilhaft ist.

Das für die Adduktierung eingesetzte Amingemisch enthaltend mindestens ein Ausgangs-Amin der Formel (I) und mindestens ein alkyliertes Amin der Formel (II) ist bevorzugt eine Reaktionsmischung aus der Alkylierung einer überstöchiometrischen Menge von mindestens einem Amin der Formel (I) mit mindestens einem Alkylierungsmittel. Eine solche Reaktionsmischung enthält neben alkylierten Aminen der Formel (II) nicht umgesetztes Ausgangs-Amin der Formel (I), welches in der Reaktionsmischung belassen wird.
Bevorzugt ist die Alkylierung eine reduktive Alkylierung, wobei als Alkylierungsmittel ein Aldehyd oder Keton und Wasserstoff eingesetzt wird. Bevorzugt wird dabei mit einem Molverhältnis zwischen dem Amin der Formel (I) und dem Aldehyd oder Keton im Bereich von 1.5/1 bis 10/1, bevorzugt 1.7/1 bis 5/1, gearbeitet. So wird die Bildung von monoalkylierten Aminen der Formel (II), bei welchen X für einen Wasserstoff-Rest steht, bevorzugt, und es steht schliesslich eine geeignete Menge an nicht umgesetztem Amin der Formel (I) für die Adduktierung zur Verfügung.
Für die reduktive Alkylierung wird bevorzugt ein Aldehyd oder Keton ausgewählt aus der Gruppe bestehend aus Cyclohexylcarbaldehyd, Benzaldehyd, 4-Methoxybenzaldehyd, 4-(Dimethylamino)benzaldehyd, Acetophenon und 1-Naphthaldehyd eingesetzt, besonders bevorzugt Benzaldehyd, Acetophenon oder 1-Naphthaldehyd, insbesondere Benzaldehyd.
Bevorzugt wird die reduktive Alkylierung in Anwesenheit eines geeigneten Katalysators durchgeführt. Als Katalysator bevorzugt sind Palladium auf Kohle (Pd/C), Platin auf Kohle (Pt/C), Adams-Katalysator oder Raney-Nickel, insbesondere Palladium auf Kohle oder Raney-Nickel.
Bei Verwendung von molekularem Wasserstoff wird die reduktive Alkylierung bevorzugt in einer Druckapparatur bei einem Wasserstoff-Druck von 5 bis 150 bar, insbesondere 10 bis 100 bar, gearbeitet. Dies kann in einem Batch-Prozess oder bevorzugt in einem kontinuierlichen Prozess erfolgen.
Die reduktive Alkylierung wird bevorzugt bei einer Temperatur im Bereich von 40 bis 120 °C, insbesondere 60 bis 100 °C, durchgeführt.

Ein weiterer Gegenstand der Erfindung ist das aus dem beschriebenen Verfahren erhaltene Reaktionsgemisch.
Das Reaktionsgemisch enthält mindestens ein Addukt-Amin der Formel (IV) und mindestens ein Addukt-Amin der Formel (V).

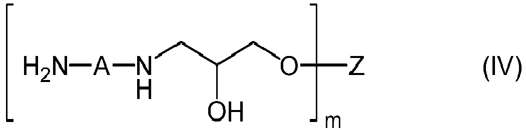

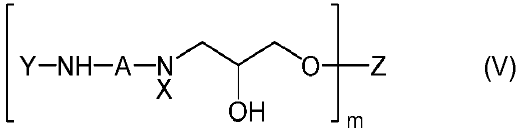

In den Formeln (IV) und (V) weisen A, X, Y, m und Z die bereits genannten Bedeutungen auf.

Für den Fall, dass m für 2 oder 3 steht, enthält das Reaktionsgemisch typischerweise zusätzlich gemischte Addukt-Amine, wie in den folgenden Formeln dargestellt.

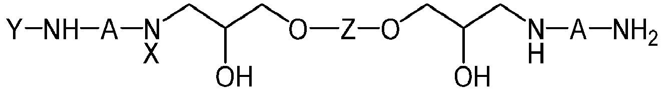

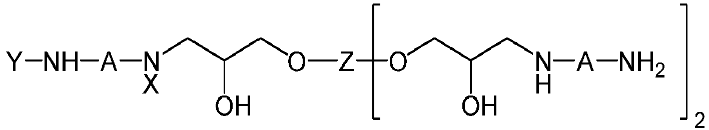

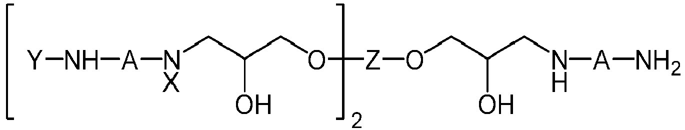

Zusätzlich enthält das Reaktionsgemisch typischerweise Anteile von höheren Addukt-Aminen, wie sie durch Reaktion eines Amins der Formel (I) oder (II) mit mehr als einem Glycidylether der Formel (III) entstehen.

Weiterhin enthält das Reaktionsgemisch typischerweise nicht umgesetzte alkylierte Amine der Formel (II) und gegebenenfalls nicht umgesetztes Ausgangs-Amin der Formel (I).

Das Reaktionsgemisch ist besonders geeignet als Härter für Epoxidharze. Bevorzugt enthält ein solcher Härter als Hauptbestandteil alkylierte Amine der Formel (II) und Addukt-Amine der Formel (IV). Ein solcher Härter wird insbesondere mit den beschriebenen bevorzugten Ausführungsformen des Verfahrens erhalten.

Nicht umgesetztes Ausgangs-Amin der Formel (I) kann nach der Adduktierung aus dem Reaktionsgemisch entfernt werden, insbesondere mittels Destillation. Insbesondere im Fall eines relativ flüchtigen Ausgangs-Amins der Formel (I), bei welchem A für einen Alkylen-Rest mit 2 bis 6, insbesondere 2 oder 3, C-Atomen steht, wie insbesondere bei 1,2-Propandiamin, wird nicht umgesetztes Ausgangs-Amin der Formel (I) nach der Adduktierung destillativ aus dem Reaktionsgemisch entfernt.

Bevorzugt enthält das Reaktionsgemisch bei der Verwendung als Härter für Epoxidharze einen Gehalt an Ausgangs-Amin der Formel (I) von weniger als 5 Gewichts-%, insbesondere weniger als 2.5 Gewichts-%, am meisten bevorzugt weniger als 1 Gewichts-%. Besonders für den Fall, dass A für einen Alkylen-Rest mit 2 bis 6, insbesondere 2 oder 3, C-Atomen steht, enthält der Härter bevorzugt einen geringen Gehalt an Ausgangs-Amin der Formel (I).

Der Härter für Epoxidharze enthält gegebenenfalls weitere Amine, welche nicht der Formel (I) oder (II) oder von damit aus der Umsetzung mit dem Glycidylether der Formel (III) abgeleiteten Addukt-Aminen entsprechen.

Der beschriebene Härter enthält gegebenenfalls mindestens einen Beschleuniger. Als Beschleuniger bevorzugt sind Säuren oder zu Säuren hydrolysierbare Verbindungen, tertiäre Amine, Salze von tertiären Aminen, quaternäre Ammoniumsalze, Amidine, Guanidine, Phenole, Mannich-Basen, Phosphite oder Mercaptogruppen aufweisende Verbindungen, insbesondere Säuren, tertiäre Amine oder Mannich-Basen. Besonders bevorzugt sind Salicylsäure oder 2,4,6-Tris(dimethylaminomethyl)phenol oder eine Kombination davon.

Der beschriebene Härter enthält gegebenenfalls mindestens einen Verdünner, insbesondere Benzylalkohol, 2-Phenoxyethanol, Cardanol (aus Cashewschalen-ÖI, enthaltend als Hauptbestandteil 3-(8,11,14-Pentadecatrienyl)phenol), styrolisiertes Phenol oder phenolgruppenhaltige aromatische Kohlenwasserstoffharze.
Als Verdünner besonders bevorzugt ist Cardanol, welches aus nachwachsenden Rohstoffen gewonnen wird.

Ein weiterer Gegenstand der Erfindung ist eine Epoxidharz-Zusammensetzung umfassend
- eine Harz-Komponente enthaltend mindestens ein Epoxidharz und
- eine Härter-Komponente enthaltend das Reaktionsgemisch aus dem beschriebenen Verfahren.

Als Epoxidharz sind übliche technische Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen.
Als Epoxidharz besonders geeignet sind sogenannte Polyepoxid-Flüssigharze, im folgenden als "Flüssigharz" bezeichnet. Diese weisen eine Glasübergangstemperatur unterhalb von 25°C auf.
Ebenfalls möglich als Epoxidharz sind sogenannte Festharze, welche eine Glasübergangstemperatur oberhalb von 25°C aufweisen und sich zu bei 25°C schüttfähigen Pulvern zerkleinern lassen.

Als Epoxidharz in der Harz-Komponente bevorzugt ist ein Flüssigharz auf der Basis eines Bisphenols, insbesondere ein Diglycidylether von Bisphenol-A, Bisphenol-F oder Bisphenol-A/F, wie sie kommerziell beispielsweise von Dow, Huntsman oder Momentive erhältlich sind. Diese Flüssigharze weisen eine für Epoxidharze niedrige Viskosität und im ausgehärteten Zustand gute Eigenschaften als Beschichtung auf. Sie können Anteile von Bisphenol A-Festharz oder Novolak-Glycidylethern enthalten.

Die Harz-Komponente kann zusätzlich einen Reaktivverdünner, insbesondere einen mindestens eine Epoxidgruppe aufweisenden Reaktivverdünner, enthalten, insbesondere ein Glycidylether von ein- oder mehrwertigen Phenolen oder aliphatischen oder cycloaliphatischen Alkoholen, insbesondere Butandioldiglycidylether, Hexandioldiglycidylether, Polyoxypropylenglycoldiglycidylether, Cardanolglycidylether oder Glycidylether von natürlichen Alkoholen wie C₈- bis C₁₀-, C₁₂- bis C₁₄- oder C₁₃- bis C₁₅-Alkylglycidylether.

Gegebenenfalls enthält die Epoxidharz-Zusammensetzung weitere Bestandteile, insbesondere in Epoxidharz-Zusammensetzungen üblicherweise eingesetzte Hilfs- und Zusatzstoffe, insbesondere Lösemittel, Verdünner, Filmbildehilfsmittel, Extender, Polymere, anorganische und/oder organische Füllstoffe, Fasern, Pigmente, Rheologie-Modifizierer, Haftverbesserer, Stabilisatoren gegen Oxidation, Wärme, Licht oder UV-Strahlung, flammhemmende Substanzen, oberflächenaktive Substanzen oder Biozide.

In der Epoxidharz-Zusammensetzung liegt das Verhältnis der Anzahl von gegenüber Epoxidgruppen reaktiven Gruppen gegenüber der Anzahl Epoxidgruppen bevorzugt im Bereich von 0.5 bis 1.5, insbesondere 0.7 bis 1.2.

Die Harz- und die Härter-Komponente der Epoxidharz-Zusammensetzung werden jeweils in einem eigenen Gebinde gelagert. Weitere Bestandteile der Epoxidharz-Zusammensetzung können als Bestandteil der Harz- oder der Härter-Komponente vorhanden sein, wobei gegenüber Epoxidgruppen reaktive weitere Bestandteile bevorzugt ein Bestandteil der Härter-Komponente sind. Ebenfalls möglich ist, dass weitere Bestandteile als eigene, weitere Komponente vorhanden sind.
Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.
Zur Anwendung der Epoxidharz-Zusammensetzung werden die Komponenten kurz vor oder während der Applikation miteinander vermischt.
Die Vermischung der Komponenten erfolgt mittels eines geeigneten Verfahrens; sie kann kontinuierlich oder batchweise erfolgen. Die Vermischung erfolgt insbesondere bei Umgebungstemperatur, welche typischerweise im Bereich von etwa 5 bis 50°C, bevorzugt bei etwa 10 bis 30°C, liegt.
Mit der Vermischung der beiden Komponenten beginnt die Aushärtung durch chemische Reaktion. Dabei reagieren die in der Epoxidharz-Zusammensetzung vorhandenen Aminwasserstoffe und gegebenenfalls vorhandene weitere gegenüber Epoxidgruppen reaktive Gruppen reagieren mit den Epoxidgruppen unter deren Ringöffnung (Additionsreaktion). Als Ergebnis hauptsächlich dieser Reaktion polymerisiert die Zusammensetzung und härtet schliesslich aus.
Die Aushärtung erfolgt typischerweise bei einer Temperatur im Bereich von 0 bis 150 °C. Bevorzugt erfolgt sie bei Umgebungstemperatur und erstreckt sich typischerweise über einige Tage bis Wochen. Die Dauer hängt unter anderem von der Temperatur, der Reaktivität der Bestandteile und deren Stöchiometrie sowie der Gegenwart von Beschleunigern ab.

Ein weiterer Gegenstand der Erfindung ist somit eine ausgehärtete Zusammensetzung erhalten aus der Aushärtung einer Epoxidharz-Zusammensetzung wie im vorliegenden Dokument beschrieben.

Die Applikation der Epoxidharz-Zusammensetzung erfolgt auf mindestens ein Substrat, wobei die Folgenden besonders geeignet sind:
- Glas, Glaskeramik, Beton, Mörtel, Backstein, Ziegel, Gips oder Natursteine wie Granit oder Marmor;
- Metalle oder Legierungen wie Aluminium, Eisen, Stahl oder Buntmetalle, oder oberflächenveredelte Metalle oder Legierungen wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe, insbesondere Hart- oder Weich-PVC, ABS, Polycarbonat (PC), Polyamid (PA), Polyester, PMMA, Epoxidharze, PUR, POM, PO, PE, PP, EPM oder EPDM, wobei die Kunststoffe gegebenenfalls mittels Plasma, Corona oder Flammen oberflächenbehandelt sind;
- Faserverstärkte Kunststoffe, wie Kohlefaser-verstärkte Kunststoffe (CFK), Glasfaser-verstärkte Kunststoffe (GFK) oder Sheet Moulding Compounds (SMC);
- beschichtete Substrate, wie pulverbeschichtete Metalle oder Legierungen;
- Farben oder Lacke.
Die Substrate können bei Bedarf vor dem Applizieren der Epoxidharz-Zusammensetzung vorbehandelt werden.

Die beschriebene Epoxidharz-Zusammensetzung ist vorteilhaft verwendbar als Faserverbundmatrix für Faserverbundwerkstoffe (Composites) wie insbesondere CFK oder GFK, oder als Vergussmasse oder Giessharz, Dichtstoff, Klebstoff, Belag, Beschichtung, Anstrich, Lack, Versiegelung, Grundierung oder Primer.

Insbesondere verwendbar ist sie als Belag, Beschichtung, Anstrich, Lack, Versiegelung, Grundierung oder Primer für Bau- und Industrieanwendungen, insbesondere als Bodenbelag oder Bodenbeschichtung für Innenräume wie Büros, Industriehallen, Turnhallen oder Kühlräume, oder im Aussenbereich für Balkone, Terrassen, Parkdecks, Brücken oder Dächer, als Schutzbeschichtung für Beton, Zement, Metalle, Kunststoffe oder Holz, beispielsweise zur Oberflächenversiegelung von Holzkonstruktionen, Fahrzeugen, Ladeflächen, Tanks, Silos, Schächten, Rohrleitungen, Pipelines, Maschinen oder Stahlkonstruktionen, beispielsweise von Schiffen, Piers, Offshore-Plattformen, Schleusentoren, Wasserkraftwerken, Flussbauten, Schwimmbädern, Windkraftanlagen, Brücken, Kaminen, Kranen oder Spundwänden, oder als Voranstrich, Haftanstrich, Korrosionsschutz-Primer oder zur Hydrophobierung von Oberflächen.

Insbesondere verwendbar ist sie weiterhin als Klebstoff, insbesondere als Karrosserieklebstoff, Sandwichelementklebstoff, Halbschalenklebstoff für Rotorblätter von Windkraftanlagen, Brückenelementklebstoff oder Verankerungsklebstoff.

Auf die vollständig oder teilweise ausgehärtete Epoxidharz-Zusammensetzung kann insbesondere bei ihrer Verwendung als Beschichtung, Belag oder Anstrich eine weitere Beschichtung, ein weiterer Belag, oder ein weiterer Anstrich appliziert werden, wobei es sich bei dieser weiteren Schicht ebenfalls um eine Epoxidharz-Zusammensetzung handeln kann, aber auch um ein anderes Material, insbesondere um eine Polyurethan- oder Polyharnstoff-Beschichtung.

Besonders vorteilhaft wird die beschriebene Epoxidharz-Zusammensetzung als Beschichtung verwendet.
Als Beschichtung wird die Epoxidharz-Zusammensetzung vorteilhaft in einem Verfahren zum Beschichten eingesetzt, wobei sie eine flüssige Konsistenz mit niedriger Viskosität und guten Verlaufseigenschaften aufweist und insbesondere als selbstverlaufende oder thixotropierte Beschichtung auf überwiegend ebene Flächen oder als Anstrich appliziert wird. Bevorzugt weist die Epoxidharz-Zusammensetzung bei dieser Applikation unmittelbar nach dem Vermischen der Harz- und der Härter-Komponente eine Viskosität, gemessen bei 20°C, im Bereich von 0.3 bis 4 Pa·s, besonders bevorzugt 0.3 bis 2 Pa·s, insbesondere 0.3 bis 1.5 Pa·s, auf. Die vermischte Zusammensetzung wird innerhalb der Verarbeitungszeit flächig als dünner Film mit einer Schichtdicke von typischerweise etwa 50 µm bis etwa 5 mm auf ein Substrat appliziert, typischerweise bei Umgebungstemperatur. Die Applikation erfolgt insbesondere durch Aufgiessen auf das zu beschichtende Substrat und anschliessendem gleichmässigem Verteilen mit Hilfe beispielsweise eines Rakels oder einer Zahntraufel. Die Applikation kann auch mit einem Pinsel oder Roller oder als Spritzapplikation erfolgen, beispielsweise als Korrosionsschutzbeschichtung auf Stahl.

Aus der Anwendung der Epoxidharz-Zusammensetzung entsteht ein Artikel umfassend die ausgehärtete Zusammensetzung aus der Aushärtung der beschriebenen Epoxidharz-Zusammensetzung. Die ausgehärtete Zusammensetzung liegt dabei insbesondere in Form einer Beschichtung vor.

Die beschriebene Epoxidharz-Zusammensetzung zeichnet sich durch vorteilhafte Eigenschaften aus. Sie ist geruchs- und emissionsarm, gut verarbeitbar, benetzt die Substrate gut und härtet schnell und störungsfrei aus, auch bei kühlen Umgebungstemperaturen. Bei der Aushärtung entstehen qualitativ hochstehende Epoxidharz-Produkte mit hoher Härte und ebenmässiger, nichtklebriger und glänzender Oberfläche, welche je nach den im beschriebenen Herstellverfahren des Härters eingesetzten Aminen kaum oder praktisch gar nicht vergilben.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.
"AHEW" steht für das Aminwasserstoff-Equivalentgewicht.
"EEW" steht für das Epoxid-Equivalentgewicht.
Als "Normklima" wird eine Temperatur von 23±1 °C und eine relative Luftfeuchtigkeit von 50±5% bezeichnet. "NK" steht für "Normklima".

### Beschreibung der Messmethoden:

Die **Viskosität** wurde auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹) gemessen.
Die **Aminzahl** wurde durch Titration bestimmt (mit 0.1N HClO₄ in Essigsäure gegen Kristallviolett).

**Verwendete Substanzen:**

| | |
|---|---|
| Araldite^{®} DY-K: | Kresylglycidylether, EEW ca. 182 g/Eq (von Huntsman) |
| Araldite^{®} GY 250: | Bisphenol-A-Diglycidylether, EEW ca. 187.5 g/Eq (von Huntsman) |
| Araldite^{®} DY-E: | Monoglycidylether von C₁₂- bis C₁₄-Alkoholen, EEW ca. 290 g/Eq (von Huntsman) |
| Cardanol: | aus Cashewschalen-Öl, enthaltend als Hauptbestandteil 3-(8,11,14-Pentadecatrienyl)phenol), Cardolite^{®} NX-2026 (von Cardolite Corp.) |

### Herstellung von Amingemischen enthaltend Ausgangs-Amin der Formel (I) und alkylierte Amine der Formel (II):

### Amingemisch M1:

In einem Rundkolben wurden 274.3 g (3.7 mol) 1,2-Propandiamin unter Stickstoffatmosphäre bei Raumtemperatur vorgelegt. Unter gutem Rühren wurde langsam eine Lösung aus 106.1 g (1 mol) Benzaldehyd in 750 ml Isopropanol dazugetropft und 2 Stunden nachgerührt. Die Reaktionsmischung wurde anschliessend bei einem Wasserstoff-Druck von 90 bar, einer Temperatur von 85 °C und einem Fluss von 5 ml/min auf einer kontinuierlich arbeitenden Hydrierapparatur mit Pd/C-Festbettkatalysator hydriert. Zur Reaktionskontrolle wurde mittels IR-Spektroskopie überprüft, ob die Iminbande bei ca. 1665 cm⁻¹ verschwunden war. Darauf wurde das Isopropanol aus der hydrierten Lösung destillativ entfernt. Erhalten wurde eine klare, leicht gelbliche Flüssigkeit, welche gemäss GC-Analyse einen Gehalt von 56.0 Gewichts-% 1,2-Propandiamin, 40.1 Gewichts-% einer Mischung aus N¹-Benzyl-1,2-propandiamin und N²-Benzyl-1,2-propandiamin und 3.9 Gewichts-% N,N'-Dibenzyl-1,2-propandiamin enthielt.

### Amingemisch M2:

45.0 g des Amingemisches **M1** wurden mit 24.7 g 1,2-Propandiamin versetzt. Erhalten wurde eine klare, leicht gelbliche Flüssigkeit, welche gemäss GC-Analyse einen Gehalt von 71.6 Gewichts-% 1,2-Propandiamin, 25.9 Gewichts-% einer Mischung aus N¹-Benzyl-1,2-propandiamin und N²-Benzyl-1,2-propandiamin und 2.5 Gewichts-% N,N'-Dibenzyl-1,2-propandiamin enthielt.

### Herstellung von Härtern mit dem erfindungsgemässen Verfahren:

### Härter H1:

45.0 g des Amingemisches **M1** wurden unter Stickstoffatmosphäre vorgelegt, auf 70 °C erwärmt und dann unter gutem Rühren langsam mit 15.6 g Kresylglycidylether (Araldite^{®} DY-K) versetzt, wobei die Temperatur der Reaktionsmischung 70 bis 80 °C betrug. Nach 1 Stunde bei 80°C wurde die Reaktionsmischung abgekühlt und 1,2-Propandiamin und weitere flüchtige Bestandteile am Rotationsverdampfer bei 65 °C entfernt. Erhalten wurde eine klare, leicht gelbliche Flüssigkeit mit einer Aminzahl von 501 mg KOH/g, einer Viskosität von 0.29 Pa·s bei 20 °C und einem AHEW von ca. 79.1 g/Eq.

### Härter H2:

69.7 g des Amingemisches **M2** wurden unter Stickstoffatmosphäre vorgelegt, auf 70 °C erwärmt und dann unter gutem Rühren langsam mit 31.0 g Kresylglycidylether (Araldite^{®} DY-K) versetzt, wobei die Temperatur der Reaktionsmischung 70 bis 80 °C betrug. Nach 1 Stunde bei 80°C wurde die Reaktionsmischung abgekühlt und 1,2-Propandiamin und weitere flüchtige Bestandteile am Rotationsverdampfer bei 65 °C entfernt. Erhalten wurde eine klare, leicht gelbliche Flüssigkeit mit einer Aminzahl von 462 mg KOH/g, einer Viskosität von 1.12 Pa·s bei 20 °C und einem AHEW von ca. 82.7 g/Eq.

### Härter H3:

45.0 g des Amingemisches **M1** wurden unter Stickstoffatmosphäre vorgelegt, auf 70 °C erwärmt und dann unter gutem Rühren langsam mit 8.5 g Araldite^{®} GY 250 versetzt, wobei die Temperatur der Reaktionsmischung 70 bis 80 °C betrug. Nach 1 Stunde bei 80°C wurde die Reaktionsmischung abgekühlt und 1,2-Propandiamin und weitere flüchtige Bestandteile am Rotationsverdampfer bei 65 °C entfernt. Erhalten wurde eine klare, leicht gelbliche Flüssigkeit mit einer Aminzahl von 551 mg KOH/g, einer Viskosität von 0.71 Pa·s bei 20 °C und einem AHEW von ca. 75.5 g/Eq.

### Herstellung von alkylierten Aminen und Addukt-Aminen als Vergleich:

### benzyliertes PDA:

45.0 g des Amingemisches **M1** wurden in einem Rundkolben vorgelegt und die flüchtigen Bestandteile, insbesondere 1,2-Propandiamin, am Rotationsverdampfer bei 65 °C entfernt. Erhalten wurde eine klare, leicht gelbliche Flüssigkeit mit einem AHEW von ca. 70.0 g/Eq, welche gemäss GC-Analyse einen Gehalt von 85.5 Gewichts-% einer Mischung aus N¹-Benzyl-1,2-propandiamin und N²-Benzyl-1,2-propandiamin und 13.5 Gewichts-% N,N'-Dibenzyl-1,2-propandiamin enthielt.

### Addukt V1:

4.74 kg 1,2-Propandiamin wurden unter Stickstoffatmosphäre vorgelegt, auf 70 °C erwärmt und dann unter gutem Rühen langsam mit 2.93 kg Kresylglycidylether (Araldite^{®} DY-K) versetzt, wobei die Temperatur der Reaktionsmischung 70 bis 80 °C betrug. Nach 1 Stunde bei 80°C wurde die Reaktionsmischung abgekühlt und die flüchtigen Bestandteile, insbesondere 1,2-Propandiamin, destillativ mittels Dünnschichtverdampfer (0.5-1 mbar, Manteltemperatur 115 °C) entfernt. Erhalten wurde klare, leicht gelbliche Flüssigkeit mit einer Aminzahl von 478.7 mg KOH/g, einer Viskosität von 3.3 Pa·s bei 20 °C und einem AHEW von ca. 90.0 g/Eq.

### Addukt V2:

25.2 g 1,2-Propandiamin wurden unter Stickstoffatmosphäre vorgelegt, auf 70 °C erwärmt und dann unter gutem Rühen langsam mit 8.5 g Araldite^{®} GY 250 versetzt, wobei die Temperatur der Reaktionsmischung 70 bis 80 °C betrug. Nach 1 Stunde bei 80°C wurde die Reaktionsmischung abgekühlt und die flüchtigen Bestandteile, insbesondere 1,2-Propandiamin, am Rotationsverdampfer bei 65 °C entfernt. Anschliessend wurde die Reaktionsmischung mit 20.0 g benzyliertem PDA, hergestellt wie vorgängig beschrieben, versetzt und auf Raumtemperatur abgekühlt. Erhalten wurde klare, leicht gelbliche Flüssigkeit mit einer Aminzahl von 568 mg KOH/g, einer Viskosität von 0.46 Pa·s bei 20 °C und einem AHEW von ca. 75.5 g/Eq.

### Herstellung von Epoxidharz-Zusammensetzungen:

### Beispiele 1 bis 12:

Für jedes Beispiel wurden die in den Tabellen 1 bis 3 angegebenen Inhaltsstoffe in den angegebenen Mengen (in Gewichtsteilen) der Härter-Komponente mittels eines Zentrifugalmischers (SpeedMixer™ DAC 150, FlackTek Inc.) vermischt und unter Ausschluss von Feuchtigkeit aufbewahrt.
Ebenso wurden die in den Tabellen 1 bis 3 angegebenen Inhaltsstoffe der Harz-Komponente verarbeitet und aufbewahrt.
Anschliessend wurden die beiden Komponenten jeder Zusammensetzung mittels des Zentrifugalmischers zu einer homogenen Flüssigkeit verarbeitet und diese unverzüglich folgendermassen geprüft: 10 Minuten nach dem Vermischen wurde die Viskosität bei 20°C bestimmt

### ("Viskosität (10')").

Ein erster Film wurde in einer Schichtdicke von 500 µm auf eine Glasplatte aufgezogen und dieser Normklima gelagert bzw. ausgehärtet. An diesem Film wurde die **Königshärte** (Pendelhärte nach König, gemessen nach DIN EN ISO 1522) nach 1 Tag ("Königshärte (1d NK)"), nach 2 Tagen ("Königshärte (2d NK)"), nach 4 Tagen ("Königshärte (4d NK)"), nach 7 Tagen ("Königshärte (7d NK)") und nach 14 Tagen ("Königshärte (14d NK)") bestimmt. Nach 14 Tagen wurde der Aspekt des Films beurteilt (in der Tabelle mit "Aspekt (NK)" bezeichnet). Als "schön" wurde dabei ein Film bezeichnet, welcher klar war und eine glänzende und nichtklebrige Oberfläche ohne Struktur aufwies. Als "Struktur" wird dabei jegliche Art von Zeichnung oder Muster auf der Oberfläche bezeichnet.

Ein zweiter Film wurde in einer Schichtdicke von 500 µm auf eine Glasplatte aufgezogen und dieser unmittelbar nach dem Applizieren während 7 Tagen bei 8 °C und 80 % relativer Feuchtigkeit und anschliessend während 3 Wochen im NK gelagert, beziehungsweise ausgehärtet. 24 Stunden nach der Applikation wurde ein Flaschendeckel aus Polypropylen auf den Film aufgesetzt, unter welchem ein feuchtes Schwämmchen platziert war. Nach weiteren 24 Stunden wurde das Schwämmchen und der Deckel entfernt und an einer neuen Stelle des Films platziert, wo es nach 24 Stunden wieder entfernt und neu platziert wurde, insgesamt 4 mal. Anschliessend wurde der Aspekt dieses Films beurteilt (in den Tabellen mit "Aspekt (8°/80%)" bezeichnet), auf die gleiche Weise wie für den Aspekt (NK) beschrieben. Dabei wurde jeweils auch die Anzahl Marken angegeben, die im Film durch das feuchte Schwämmchen und/oder den aufgesetzten Deckel sichtbar waren. An den so ausgehärteten Filmen wurde wiederum die Königshärte bestimmt, jeweils nach 7 Tagen bei 8 °C und 80 % relativer Feuchtigkeit ("Königsh. (7d 8°/80%)"), dann nach weiteren 2 Tagen im NK ("Königsh. (+2d NK)"), 7 Tagen im NK ("Königsh. (+7d NK)") und 14d im NK ("Königsh. (+14d NK)").

Als Mass für die Vergilbung wurde weiterhin die Farbveränderung nach Belastung in einem Bewitterungstester bestimmt. Dazu wurde ein weiterer Film in einer Schichtdicke von 500 µm auf eine Glasplatte aufgezogen und dieser im Normklima während 2 Wochen gelagert bzw. ausgehärtet und anschliessend in einem Bewitterungstester des Typs Q-Sun Xenon Xe-1 mit optischem Filter Q-SUN Daylight-Q und einer Xenon Lampe mit einer Lichtstärke von 0.51 W/m² bei 340 nm bei einer Temperatur von 65°C während 72 Stunden belastet **(Q-Sun (72h)).** Anschliessend wurde der Farbunterschied ΔE des so belasteten Films im Vergleich zum entsprechenden nicht belasteten Film mittels einem Colorimeter NH310 von Shenzen 3NH Technology Co. LTD, ausgerüstet mit Silicon Photoelectric Diode Detector, Light Source A, Color Space Measurement Interface CIE L*a*b*C*H*, bestimmt. ΔE-Werte von 0.5 bis 1.5 stehen dabei für einen geringfügigen Farbunterschied, 1.5 bis 3 für einen merklichen Farbunterschied, 3 bis 6 für einen deutlich sichtbaren Farbunterschied und mehr als 6 für einen grossen Farbunterschied.

Die Resultate sind in den Tabellen 1 bis 3 angegeben.

Die mit "(Ref.)" bezeichneten Beispiele sind Vergleichsbeispiele.

**Tabelle 1: Zusammensetzung und Eigenschaften der Beispiele 1 bis 4.**

| **Beispiel** | | **1** | **2 (Ref.)** | **3** | **4 (Ref.)** |
|---|---|---|---|---|---|
| **Harz-Komponente:** | | | | | |
| | Araldite^{®} GY 250 | 167.2 | 167.2 | 167.2 | 167.2 |
| | Araldite^{®} DY-E | 31.8 | 31.8 | 31.8 | 31.8 |
| **Härter-Komponente:** | | | | | |
| | Härter **H1** | 79.1 | - | 79.1 | - |
| | Addukt **V1** | - | 40.5 | - | 40.5 |
| | benzyliertes PDA | - | 38.5 | - | 38.5 |
| | Cardanol | - | - | 33.9 | 33.9 |
| Viskosität (10') [Pa·s] | | 0.99 | 0.93 | 0.94 | 0.92 |
| Königshärte [s] | (1d NK) | 73 | 111 | 17 | 27 |
| | (2d NK) | 158 | 183 | 42 | 59 |
| | (4d NK) | 210 | 239 | 80 | 98 |
| | (7d NK) | 228 | 246 | 97 | 115 |
| | (14d NK) | 225 | 248 | 116 | 122 |
| Aspekt (NK) | | schön | schön | schön | schön |
| Q-Sun (72h) ΔE | | 1.9 | 1.5 | 3.5 | 5.0 |
| Königsh. [s] | (7d 8°/80%) | 63 | 74 | 18 | 25 |
| | (+2d NK) | 165 | 193 | 64 | 80 |
| | (+7d NK) | 213 | 234 | 91 | 109 |
| | (+14d NK) | 228 | 245 | 102 | 112 |
| Aspekt (8°/80%) | | schön | schön | schön | schön |
| Anzahl Marken | | 1 | 1 | 1 | 1 |

**Tabelle 2: Zusammensetzung und Eigenschaften der Beispiele 5 bis 8.**

| **Beispiel** | | **5** | **6 (Ref.)** | **7** | **8 (Ref.)** |
|---|---|---|---|---|---|
| **Harz-Komponente:** | | | | | |
| | Araldite^{®} GY 250 | 167.2 | 167.2 | 167.2 | 167.2 |
| | Araldite^{®} DY-E | 31.8 | 31.8 | 31.8 | 31.8 |
| **Härter-Komponente:** | | | | | |
| | Härter **H2** | 82.7 | - | 82.7 | - |
| | Addukt **V1** | - | 55.8 | - | 55.8 |
| | benzyliertes PDA | - | 26.6 | - | 26.6 |
| | Cardanol | - | - | 35.4 | 35.3 |
| Viskosität (10') [Pa·s] | | 1.75 | 1.52 | 1.74 | 1.44 |
| Königshärte [s] | (1d NK) | 69 | 99 | 14 | 22 |
| | (2d NK) | 155 | 176 | 38 | 52 |
| | (4d NK) | 203 | 227 | 69 | 94 |
| | (7d NK) | 230 | 235 | 90 | 112 |
| | (14d NK) | 225 | 225 | 108 | 120 |
| Aspekt (NK) | | schön | schön | schön | schön |
| Q-Sun (72h) ΔE | | 1.3 | 1.2 | 2.3 | 3.4 |
| Königsh. [s] | (7d 8°/80%) | 57 | 70 | 17 | 21 |
| | (+2d NK) | 158 | 174 | 49 | 70 |
| | (+7d NK) | 213 | 225 | 81 | 102 |
| | (+14d NK) | 222 | 225 | 92 | 111 |
| Aspekt (8°/80%) | | schön | schön | schön | schön |
| Anzahl Marken | | 1 | 1 | 1 | 1 |

**Tabelle 3: Zusammensetzung und Eigenschaften der Beispiele 9 bis 12.**

| | **Beispiel** | **9** | **10 (Ref.)** | **11** | **12 (Ref.)** |
|---|---|---|---|---|---|
| **Harz-Komponente:** | | | | | |
| | Araldite^{®} GY 250 | 167.2 | 167.2 | 167.2 | 167.2 |
| | Araldite^{®} DY-E | 31.8 | 31.8 | 31.8 | 31.8 |
| **Härter-Komponente:** | | | | | |
| | Härter **H3** | 75.5 | - | 75.5 | - |
| | **Addukt V2** | - | 75.5 | - | 75.5 |
| | Cardanol | - | - | 32.4 | 32.4 |
| Viskosität (10') [Pa·s] | | 1.69 | 1.50 | 1.92 | 1.75 |
| Königshärte [s] | (1d NK) | 126 | 134 | 52 | 67 |
| | (2d NK) | 209 | 186 | 109 | 122 |
| | (4d NK) | 238 | 231 | 144 | 154 |
| | (7d NK) | 231 | 237 | 161 | 168 |
| | (14d NK) | 226 | 224 | 172 | 175 |
| Aspekt (NK) | | schön | schön | schön | schön |
| Q-Sun (72h) ΔE | | 2.0 | 1.1 | 3.6 | 3.2 |
| Königsh. [s] | (7d 8°/80%) | 43 | 39 | 38 | 21 |
| | (+2d NK) | 150 | 112 | 105 | 85 |
| | (+7d NK) | 185 | 133 | 127 | 105 |
| | (+14d NK) | 200 | 146 | 140 | 106 |
| Aspekt (8°/80%) | | schön | I. Zeichn.¹ | schön | schön |
| Anzahl Marken | | 1 | 1 | 1 | 2 |

| | | | | | |
|---|---|---|---|---|---|
| ¹ leichte Zeichnung auf der Oberfläche | | | | | |

## Patentansprüche

1. Verfahren zur Herstellung eines Härters für Epoxidharze, **dadurch gekennzeichnet, dass**
- ein Amingemisch enthaltend mindestens ein Ausgangs-Amin der Formel (I) und mindestens ein alkyliertes Amin der Formel (II),
H₂N-A-NH₂ (I)
X-NH-A-NH-Y (II)
wobei
A in beiden Formeln für denselben Alkylen-Rest mit 2 bis 15 C-Atomen, welcher gegebenenfalls cyclische Anteile und gegebenenfalls sekundäre oder tertiäre Aminogruppen aufweist, steht,
X für einen Wasserstoff-Rest oder für Y steht,
Y für einen Alkyl- oder Cycloalkyl- oder Aralkyl-Rest mit 1 bis 20 C-Atomen steht, der gegebenenfalls Heteroatome aufweist und frei ist von aktivem Wasserstoff,
- mit mindestens einem Glycidylether der Formel (III), 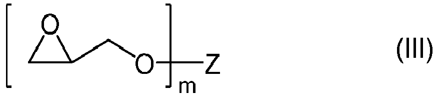 wobei
m für 1 oder 2 oder 3 steht, und
Z für einen m-wertigen, gegebenenfalls Ether-Sauerstoff aufweisenden Kohlenwasserstoff-Rest mit einem Molekulargewicht im Bereich von 56 bis 1'500 g/mol steht,
umgesetzt wird.

2. Verfahren gemäss Anspruch 1, **dadurch gekennzeichnet, dass** A für einen Alkylen-Rest mit 2 bis 6, insbesondere 2 oder 3, C-Atomen steht.

3. Verfahren gemäss einem der vorhergehenden Ansprüche, **dadurch gekennzeichnet, dass** X für einen Wasserstoff-Rest steht.

4. Verfahren gemäss einem der vorhergehenden Ansprüche, **dadurch gekennzeichnet, dass** das Amingemisch neben mindestens einem monoalkylierten Amin der Formel (II), bei welchem X für einen Wasserstoff-Rest steht, zusätzlich mindestens ein dialkyliertes Amin der Formel (II), bei welchem X für Y steht, enthält.

5. Verfahren gemäss einem der vorhergehenden Ansprüche, **dadurch gekennzeichnet, dass** Y für einen Rest der Formel 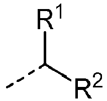 steht, wobei
R¹ für einen Wasserstoff-Rest oder für Methyl oder Phenyl steht, und
R² für einen fünf- oder sechs- oder siebengliedrigen Cycloalkyl- oder Aryl-Rest mit 4 bis 7 C-Atomen steht, der gegebenenfalls Alkyl-substituiert ist.

6. Verfahren gemäss einem der vorhergehenden Ansprüche, **dadurch gekennzeichnet, dass** Y ausgewählt ist aus der Gruppe bestehend aus Cyclohexylmethyl, Benzyl, 1-Phenylethyl und 1-Naphthylmethyl.

7. Verfahren gemäss einem der vorhergehenden Ansprüche, **dadurch gekennzeichnet, dass** Z für den Rest von o-, m- oder p-Kresylglycidylether, Bisphenol-A-Diglycidylether, Bisphenol-F-Diglycidylether oder Bisphenol-A/F-Diglycidylether nach Entfernung der Glycidoxygruppen steht.

8. Verfahren gemäss einem der vorhergehenden Ansprüche, **dadurch gekennzeichnet, dass** die primären Aminogruppen gegenüber den Epoxidgruppen im stöchiometrischen Überschuss vorhanden sind.

9. Verfahren gemäss einem der vorhergehenden Ansprüche, **dadurch gekennzeichnet, dass** das Molverhältnis zwischen dem Ausgangs-Amin der Formel (I) und den Epoxidgruppen im Bereich von 1/1 bis 15/1 liegt.

10. Verfahren gemäss einem der vorhergehenden Ansprüche, **dadurch gekennzeichnet, dass** nach erfolgter Umsetzung übriggebliebenes Ausgangs-Amin der Formel (I) zumindest teilweise aus dem Härter entfernt wird.

11. Verfahren gemäss einem der vorhergehenden Ansprüche, **dadurch gekennzeichnet, dass** das für die Umsetzung mit dem Glycidylether der Formel (III) eingesetzte Amingemisch eine Reaktionsmischung aus der Alkylierung einer überstöchiometrischen Menge von mindestens einem Amin der Formel (I) mit mindestens einem Alkylierungsmittel darstellt.

12. Reaktionsgemisch erhalten aus dem Verfahren gemäss einem der Ansprüche 1 bis 11.

13. Epoxidharz-Zusammensetzung umfassend
- eine Harz-Komponente enthaltend mindestens ein Epoxidharz und
- eine Härter-Komponente enthaltend das Reaktionsgemisch gemäss Anspruch 12.

14. Verwendung der Epoxidharz-Zusammensetzung gemäss Anspruch 13 als Beschichtung.

15. Ausgehärtete Zusammensetzung erhalten aus der Aushärtung einer Epoxidharz-Zusammensetzung gemäss Anspruch 13.
